Europäisches Patentamt

European Patent Office

Office européen des brevets

(19)

(11) **EP 0 557 166 B1**

(12) **FASCICULE DE BREVET EUROPEEN**

(45) Date de publication et mention
de la délivrance du brevet:
**15.10.1997 Bulletin 1997/42**

(51) Int Cl.⁶: **G10L 3/02**, H04R 3/00,
G01S 3/808

(21) Numéro de dépôt: **93400346.8**

(22) Date de dépôt: **11.02.1993**

(54) **Procédé de réduction de bruit acoustique dans un signal de parole**

Rauchverminderungsverfahren in einem Sprachsignal

Noise reduction method in a speech signal

(84) Etats contractants désignés:
**AT BE CH DE DK ES FR GB GR IT LI LU NL SE**

(30) Priorité: **18.02.1992 FR 9201819**

(43) Date de publication de la demande:
**25.08.1993 Bulletin 1993/34**

(73) Titulaire: **ALCATEL ALSTHOM COMPAGNIE GENERALE D'ELECTRICITE**
**75008 Paris (FR)**

(72) Inventeurs:
- **Robbe, Francois**
  **F-95220 Herblay (FR)**
- **Dartois, Luc**
  **F-78955 Carrieres Sous Poissy (FR)**

(74) Mandataire:
**Pothet, Jean Rémy Emile Ludovic et al**
**ALCATEL ALSTHOM,**
**Département de Propriété Industrielle,**
**30, avenue Kléber**
**75116 Paris (FR)**

(56) Documents cités:
US-A- 112 430          US-A- 4 333 170
US-A- 4 653 102

- ALTA FREQUENZA vol. 53, no. 3, 1 Mai 1984, MILANO IT pages 190 - 195 AUDISIO, PIRANI 'Noisy speech enhancement: a comparative analysis of three different techniques'
- IEEE TRANSACTIONS ON ACOUSTICS,SPEECH AND SIGNAL PROCESSING vol. 27, no. 2, Avril 1979, NEW YORK US pages 113 - 120 BOLL 'Suppression of acoustic noise in speech using spectral subtraction'
- SIGNAL PROCESSING. EUROPEAN JOURNAL DEVOTED TO THE METHODS AND APPLICATIONS OF SIGNAL PROCESSING vol. 15, no. 1, Juillet 1988, AMSTERDAM NL pages 43 - 56 DAL DEGAN, PRATI 'Acoustic noise analysis and speech enhancement techniques for mobile radio applications'

## Description

Le domaine de l'invention est celui des procédés permettant de réduire le bruit acoustique présent dans un signal de parole.

De façon connue, lors d'une prise de son en ambiance bruitée, il est avantageux d'éliminer le bruit ambiant afin que celui-ci ne soit pas pris en compte par des moyens d'enregistrement ou de retransmission du signal sonore. Ce dernier cas de figure se retrouve notamment dans le domaine de la radiotéléphonie mobile où il est souhaitable de ne pas transmettre le bruit ambiant, par exemple celui du moteur d'un véhicule dans lequel est utilisé un radiotéléphone, vers le destinataire du signal de parole.

L'article scientifique "Acoustic noise analysis and speech enhancement techniques for mobile radio applications" (Analyses de bruit acoustique et techniques d'amélioration de la parole pour applications de radio mobile) de DAL DEGAN et PRATI, Elsevier Science Publishers B.V., Signal Processing 15, 1988, p.43 à 56, décrit et compare différentes techniques de traitement du bruit dans un signal de parole prélevé dans un véhicule automobile.

D'après cet article, on connaît des procédés de traitement de signal qui consistent à effectuer une estimation du spectre du bruit ambiant et à soustraire ce spectre de bruit du spectre du signal mesuré, provenant d'un microphone. Ce procédé reposant sur le principe d'annulation de bruit par soustraction spectrale est également décrit dans l'article "Suppression of acoustic noise in speech using spectral substraction" (suppression du bruit acoustique dans la parole utilisant la soustraction spectrale) de S.F. BOLL, IEEE Trans. ASSP. Vol. ASSP-27, 1979, pages 113 à 120.

Cependant, le principal inconvénient de cette méthode est qu'il est nécessaire d'effectuer fréquemment des mises à jour du spectre de bruit afin de tenir compte des évolutions du bruit ambiant et que cette mise à jour ne peut se faire que lorsque l'utilisateur ne parle pas, c'est à dire pendant des périodes de silence. Ainsi, dans un environnement où le bruit ambiant varie souvent et de façon importante, notamment dans un véhicule automobile, il est nécessaire de disposer de nombreuses périodes de silence pour mettre fréquemment à jour le spectre de bruit ambiant. On ne dispose cependant pas toujours de périodes de silence suffisamment longues pour réactualiser le spectre de bruit et, lorsque les périodes de silence sont trop espacées, on assiste à une dégradation du spectre de bruit qui ne peut plus tenir compte des bruits brefs. La qualité des signaux de parole transmis s'en trouve alors affectée.

La présente invention a notamment pour objectif de pallier ces inconvénients. On connaît également de US-A-4 653 102 un procédé de reduction de bruit ambiant sur un signal de parole mettant en oeuvre un doublet microphonique, un calcul de FFT sur les signaux captés, et un traitement fréquentiel. La détection acoustique par doublet microphonique de l'origine d'une source de bruit acoustique par calcul de différence de phase entre les signaux captés par les deux microphones est également connue de US-A-4 333 170.

Plus précisément, un des objectifs de l'invention est de fournir un procédé de traitement de signaux sonores permettant d'atténuer de façon importante le bruit ambiant et d'augmenter ainsi la qualité d'une transmission de signaux de parole, cette atténuation de bruit étant effectuée à partir d'un spectre de bruit remis à jour sans nécessiter de période de silence de la part du locuteur.

Cet objectif, ainsi que d'autres qui apparaîtront par la suite, est atteint grâce à un procédé de réduction de bruit acoustique compris dans un signal sonore reçu comprenant un signal de parole, ce procédé étant du type consistant à soustraire les composantes spectrales de bruit dudit signal sonore reçu pour reconstituer le spectre dudit signal de parole et consiste à:

- convertir cycliquement par transformée de Fourier des signaux numériques, résultant de conversions analogique-numérique de signaux fournis par deux microphones éloignés d'une distance fixe et recevant ledit signal sonore, en deux séries de données discrètes, chaque donnée discrète desdites séries étant représentative de l'énergie et de la phase d'un canal de fréquence du spectre dudit signal sonore, lesdits canaux de fréquence étant adjacents de façon à être représentatifs dudit spectre dudit signal sonore reçu;

- déterminer l'angle d'arrivée dominant dudit signal sonore reçu à partir des différences de phase entre les données discrètes correspondant aux mêmes canaux de fréquence desdites séries, ledit angle d'arrivée dominant correspondant à l'angle d'arrivée dudit signal de parole;

- obtenir un spectre instantané dudit signal sonore reçu correspondant à une desdites séries de données discrètes ou obtenu par une combinaison desdites séries discrètes permettant d'obtenir une amplification dudit signal de parole par rapport audit bruit;

- mettre à jour un spectre de bruit en comparant, pour chaque canal de fréquence dudit spectre instantané, la valeur absolue de la différence entre ledit angle d'arrivée dominant et l'angle d'arrivée du canal de fréquence considéré avec une valeur de seuil de tolérance, ledit spectre de bruit étant constitué des mêmes canaux de fréquence que ledit spectre instantané, les énergies desdits canaux de fréquence dudit spectre de bruit étant mises à jour à l'aide des énergies des canaux de fréquence dudit spectre instantané dont la valeur absolue de la différence entre ledit angle d'arrivée dominant et l'angle d'arrivée de ces canaux de fréquence est supérieure à ladite valeur de seuil de tolérance;

- soustraire ledit spectre de bruit mis à jour dudit spectre instantané pour obtenir un spectre de sortie constitué par le spectre dudit signal de parole.

Le principe de ce procédé repose donc sur l'évaluation d'un angle d'arrivée dominant correspondant à la position du locuteur par rapport aux deux microphones recevant le signal sonore, pour extraire le signal de parole du signal de bruit par soustraction spectrale.

Avantageusement, le procédé comprend également une étape de correction dudit spectre de bruit mis à jour en fonction du résultat de ladite soustraction.

Préférentiellement, ladite correction dudit spectre de bruit mis à jour consiste à compter, après ladite soustraction, le nombre de canaux de fréquence dont l'énergie est supérieure à une valeur de seuil d'énergie, et à remplacer ledit spectre de bruit mis à jour par la totalité dudit spectre instantané si le nombre desdits canaux de fréquence dont l'énergie est supérieure à ladite valeur de seuil d'énergie est inférieur à une valeur numérique prédéterminée.

Avantageusement, les énergies des données discrètes du résultat de ladite soustraction supérieures à ladite valeur de seuil d'énergie sont forcées à zéro avant que ledit résultat ne constitue ledit spectre de sortie.

On élimine ainsi les fréquences porteuses de bruit de forte amplitude dans le spectre de sortie.

Préférentiellement et selon un mode de mise en oeuvre complémentaire, ladite correction dudit spectre de bruit mis à jour consiste à compter, après ladite soustraction, le nombre de canaux de fréquence dont l'énergie est supérieure à ladite valeur de seuil d'énergie, et à remplacer les canaux dudit spectre de bruit mis à jour par les canaux dudit spectre instantané ayant produit un résultat négatif après ladite soustraction si le nombre desdits canaux de fréquence dont l'énergie est supérieure à ladite valeur de seuil d'énergie est supérieur à ladite valeur numérique prédéterminée.

Selon un mode de réalisation préférentiel, ladite détermination dudit angle d'arrivée dominant est réalisée en sommant dans des cases mémoire, pour chacun desdits canaux de fréquence, des poids proportionnels à l'énergie desdits canaux de fréquence, chaque case mémoire correspondant à un intervalle d'angle d'arrivée, lesdits poids étant sommés dans les cases mémoire correspondant aux angles d'arrivée desdits canaux de fréquence, ledit angle d'arrivée dominant correspondant à l'angle d'arrivée affecté à la case mémoire dont le poids est le plus important.

On effectue ainsi une détermination de l'angle d'arrivée dominant, correspondant à la position du locuteur par rapport aux deux microphones si ce locuteur émet un signal de parole.

Avantageusement, lesdits poids sont également proportionnels aux fréquences desdits canaux de fréquence et lesdites sommations consistent à effectuer des moyennes glissantes.

Selon un mode de mise en oeuvre préférentiel, ladite combinaison desdites séries discrètes permettant d'obtenir une amplification dudit signal de parole par rapport audit bruit consiste à:

- mettre en phase lesdites données discrètes d'une desdites séries avec celles de l'autre desdites séries à partir dudit angle d'arrivée dominant de façon à mettre en phase les données discrètes desdites séries dont l'angle d'arrivée correspond audit angle d'arrivée dominant;

- sommer lesdites données discrètes desdites séries en phase afin d'amplifier les données discrètes correspondant audit signal de parole par rapport aux données discrètes correspondant audit bruit acoustique.

Le procédé de l'invention est préférentiellement appliqué au traitement d'un signal de parole dans un radiotéléphone.

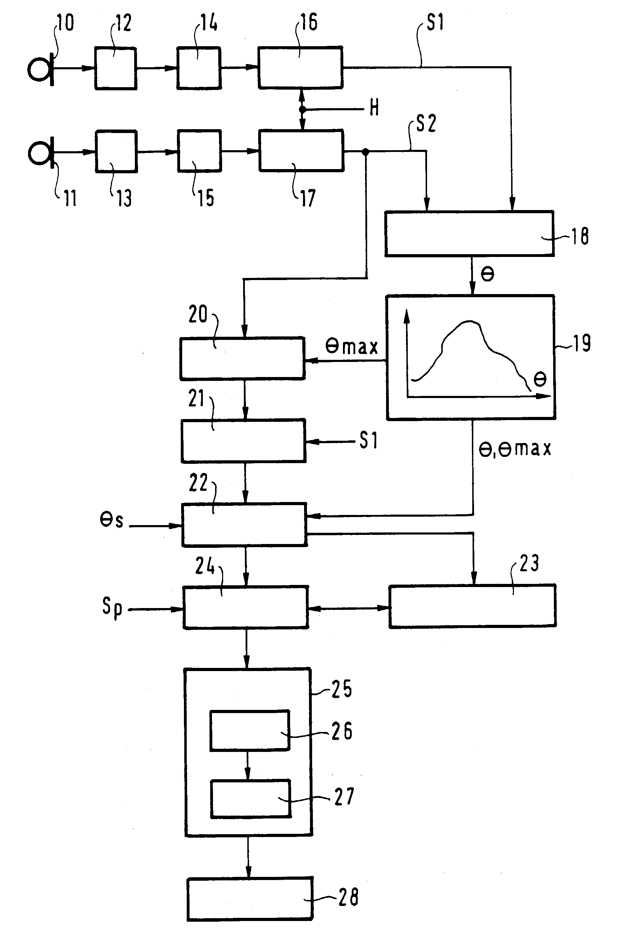

D'autres caractéristiques et avantages de l'invention apparaîtront à la lecture de la description suivante d'un mode de mise en oeuvre préférentiel du procédé de l'invention, donné à titre illustratif et non limitatif, ce procédé étant mis en oeuvre dans un dispositif dont le bloc diagramme est représenté dans la figure unique annexée.

Le procédé de la présente invention peut être décomposé en 7 étapes successives qui seront chacune détaillées par la suite:

- une première étape de traitement du signal consiste à numériser les signaux fournis par deux microphones fixes et à effectuer des transformées de Fourier sur ces signaux numérisés pour obtenir deux séries de données discrètes, chaque donnée discrète d'une série étant représentative de l'énergie et de la phase d'un canal de fréquence donné du spectre du signal sonore reçu par les deux microphones;

- une deuxième étape de traitement consiste à déterminer l'angle d'arrivée du signal capté par les deux microphones fixes à partir des différences de phase existant entre deux canaux de fréquence identiques des séries discrètes. La connaissance de cet angle d'arrivée permet de connaître la position du locuteur par rapport aux deux microphones;

- une troisième étape de traitement consiste à recombiner en phase les signaux de parole fournis par les deux microphones fixes pour augmenter la puissance du signal de parole par rapport au bruit;

- une quatrième étape de traitement consiste à mettre à jour le spectre de bruit à partir de l'angle d'arrivée du signal de parole;

- une cinquième étape de traitement consiste à soustraire le spectre de bruit du spectre instantané mesuré pour obtenir un spectre de sortie;

- une sixième étape de traitement consiste à corriger le le spectre de bruit en fonction du résultat de la soustraction;

- une septième et dernière étape de traitement consiste à reconstruire le signal de sortie pour permettre par exemple son émission (application radiotéléphonique).

La première étape de traitement du signal consiste à numériser les signaux analogiques fournis par deux microphones et à appliquer une transformée de Fourier à ces signaux numériques pour obtenir deux séries de signaux numériques.

Les microphones, référencés 10 et 11 dans la figure annexée, forment une antenne acoustique. Ils sont tous les deux fixes et le dispositif mettant en oeuvre l'invention est donc préférentiellement appliqué à un système mains libres. Les signaux analogiques provenant des microphones 10 et 11 sont appliqués à des convertisseurs analogiques-numériques respectivement notés 12 et 13 assurant également un filtrage des signaux (bande de fréquence 300-3400 Hz). Les signaux numérisés sont alors admis dans des fenêtres de Hamming 14,15 sous forme numérique et ensuite convertis en vecteurs numériques par des dispositifs 16,17 de calcul de transformées de Fourier rapides (FFT) d'ordre N.

Les convertisseurs analogiques-numériques 12 et 13 fournissent séquentiellement chacun 256 valeurs numériques à un buffer de sortie non représenté comprenant 512 emplacement mémoire. A un instant t, le buffer fournit 512 valeurs numériques à une fenêtre de Hamming, ces 512 valeurs numériques étant constituées par les 256 valeurs calculées à l'instant t mises à la suite de 256 autres valeurs calculées à l'instant t-1. Chaque fenêtre de Hamming 14 et 15 assure une atténuation des lobes secondaires du signal reçu pour permettre une augmentation de la résolution des signaux par les FFT 16 et 17. Chacune de ces fenêtres 14 et 15 fournit 512 valeurs numériques à un des dispositifs 16 et 17. Ces derniers fournissent chacun une série de 512 canaux de fréquence se partageant la bande de fréquence 0 à 8 kHz. Chaque canal de fréquence mesure donc un peu plus de 15 Hz. Une horloge H de cadencement est utilisée dans les dispositifs de calcul de FFT 16 et 17.

Cette horloge peut également être remplacée par un dispositif de comptage du nombre d'échantillons fournis par les FFT 16 et 17, ce dispositif de comptage étant remis à zéro lorsque 512 traitements ont été effectués.

Les résultats S1 et S2 de ces calculs sont donc constitués d'une succession de vecteurs sous forme numérique, chaque vecteur correspondant à un échantillonnage du spectre d'un des signaux d'entrée et étant par exemple constitué de deux mots de 16 bits définissant un nombre complexe.

En réalité, seuls 256 vecteurs différents peuvent être pris en compte, vu que, dans le cas d'un signal réel (au sens mathématique du terme), le module de la transformée de Fourier est une fonction paire alors que la phase est impaire. Les 256 vecteurs restants ne sont pas pris en compte. En sortie de FFT, chaque voie fournit donc 256 vecteurs composés chacun de deux mots de 16 bits.

La deuxième étape de traitement consiste à déterminer l'angle d'arrivée du signal capté par les deux microphones fixes à partir des différences de phase existant entre deux canaux de fréquence identiques des séries discrètes.

Les vecteurs issus des FFT sont successivement fournis à un dispositif 18 de calcul de déphasage entre les signaux issus des microphones 10 et 11. Les séries S1 et S2 sont caractérisées respectivement par des canaux de fréquence identiques, à chaque canal de fréquence de chaque voie d'entrée correspondant une phase $\Phi 1$ et $\Phi 2$ et des modules différents si le signal sonore arrivant sur le microphone 10 n'est pas strictement identique à celui arrivant sur le microphone 11 (déphasage des signaux dû au retard de propagation).

Les signaux S1 et S2 sont donc constitués de séries de vecteurs, chaque couple de vecteurs correspondant à un canal de fréquence, et sont fournis à un dispositif 18 de calcul du déphasage, canal de fréquence par canal de fréquence, existant entre les signaux S1 et S2.

La distance entre les deux microphones étant connue, en approximant le signal sonore à une onde plane, on peut retrouver l'angle d'arrivée du signal sonore dans chaque canal de fréquence par la relation:

$$\sin\theta = \frac{v.\delta\Phi}{2.\pi.d.f}$$

où:

- $\theta$ est l'angle d'arrivée recherché du signal sonore du canal de fréquence considéré;
- $v$ est la vitesse du son;
- $\delta\Phi$ est la différence de phase entre les deux signaux;
- $d$ est la distance séparant les microphones 10 et 11;
- $f$ est la fréquence en Hz correspondant au canal de fréquence considéré. La fréquence f est par exemple la fréquence centrale de ce canal de fréquence.

Le dispositif de calcul 18 assure donc un calcul du déphasage entre les signaux issus des deux microphones, canal par canal.

Le dispositif 18 fournit les angles d'arrivée $\theta$ calculés pour les différents canaux de fréquence à un dispositif 19 de recherche d'angle d'arrivée. Le dispositif 19 met à jour un histogramme des angles d'arrivée comprenant m cases couvrant les angles -90 à +90°. Chaque case a donc une longueur de 180/m degrés.

La mise à jour de l'histogramme consiste, pour chaque canal de fréquence, à ajouter, dans la case correspondant à l'angle d'arrivée calculé par le dispositif de calcul 18, un poids proportionnel à la fréquence et proportionnel à l'énergie présente dans le canal considéré (amplitude de la composante spectrale). Le poids ajouté est préférentiellement proportionnel à la fréquence car la détermination de l'angle est plus fiable dans les hautes fréquences qui vérifient à la fois une meilleure approximation de l'onde plane et un $\delta f/f$ plus faible. La valeur stockée dans une case est en fait le résultat d'une moyenne glissante calculée selon la relation:

$$c(n) = a.c(n-1) + (1-a).poids(n)$$

où:

- $c(n)$ est la valeur contenue dans une case de l'histogramme à l'instant n;
- a est un réel inférieur à 1 et proche de 1;
- poids(n) est la valeur du poids à l'instant n. Cette valeur est par exemple égale à l'énergie du canal considéré multipliée par la fréquence de ce canal.

S'il n'y a pas de signal de parole dans le signal sonore reçu par les deux microphones 10 et 11, les valeurs stockées dans les différentes cases mémoire diminuent au fur et à mesure que de nouvelles données arrivent, de telle sorte qu'en définitive, les poids des différentes cases mémoire sont sensiblement égaux entre eux, le bruit se répartissant uniformément dans les différentes cases s'il ne provient pas d'une source localisée, comme par exemple du moteur d'un véhicule.

L'histogramme est donc remis à jour périodiquement, par exemple toutes les 32 ms.

Des moyens non représentés permettent également de bloquer la mise à jour de l'histogramme lorsqu'un signal de parole est reçu par l'utilisateur.

Lorsque la mise à jour a été effectuée sur tous les canaux, le dispositif 17 recherche le maximum de l'histogramme, c'est à dire la case de poids le plus important. L'emplacement de cette case, c'est à dire l'angle d'arrivée qui lui a été affecté, correspond à l'angle d'arrivée dominant. Cet angle d'arrivée dominant, ci-après dénommé $\theta_{max}$, est celui sous lequel les signaux sonores arrivent avec l'énergie la plus importante.

Lorsque le signal sonore comprend de la parole, l'angle d'arrivée dominant $\theta_{max}$ correspond à la position du locuteur par rapport aux deux microphones. En effet, les fréquences de bruit provenant de sources non localisées se répartissent à peu près uniformément dans les différentes cases de l'histogramme, alors que les fréquences de parole issues d'une source localisée (provenant du locuteur) s'accumuleront toujours dans la même case, faisant rapidement apparaître un pic dans l'histogramme de la case correspondant à l'angle d'arrivée dominant $\theta_{max}$.

Selon un autre mode de réalisation, on crée autant d'histogrammes qu'il y a de canaux de fréquence et on effectue une moyenne, sur tous les canaux, des différents histogrammes, afin de détecter l'angle d'arrivée dominant. Ce mode de mise en oeuvre nécessite cependant des moyens de mémorisation de taille plus importante et c'est pourquoi il est préférable de calculer des moyennes glissantes pour chaque case mémoire.

D'autres modes de réalisation permettant de connaître l'angle d'arrivée du signal de parole peuvent également être mis en oeuvre.

La deuxième étape de traitement du signal du procédé de l'invention permet donc de connaître l'angle d'arrivée $\theta_{max}$ des signaux de parole.

La troisième étape de traitement du signal consiste à combiner en phase les signaux fournis par les deux microphones. Cette combinaison a pour objet une amplification du signal de parole par rapport au signal de bruit. Cette étape fait intervenir les blocs 20 et 21 qui sont respectivement des moyens de remise en phase des deux voies et des moyens d'addition des voies rephasées.

Le dispositif 19 de recherche d'angle d'arrivée fournit aux moyens 20 de remise en phase la valeur $\theta_{max}$ de l'angle d'arrivée dominant. Les moyens 20 calculent, pour chaque canal de fréquence, la différence de phase existant entre les deux voies d'entrée pour l'angle d'arrivée dominant $\theta_{max}$ qui lui est fourni par le dispositif 19. Ce calcul est réalisé à partir de la relation précédente, où $\theta$ est remplacé par $\theta_{max}$, c'est à dire:

$$\delta\Phi = (2.\pi.d.f.\sin\theta_{max})/v$$

La différence de phase obtenue pour chaque canal de fréquence est sommée (ou soustraite, selon le mode de calcul de $\delta\Phi$) à la phase d'un des deux signaux. Dans le mode de mise en oeuvre représenté, la différence de phase est ajoutée (soustraite) à (de) S2. Les moyens de remise en phase 20 permettent donc d'obtenir un signal S2 dont les canaux de fréquence correspondant au signal de parole sont en phase avec ceux du signal S1 (puisque ces canaux de fréquence sont porteurs de l'énergie la plus importante permettant de déterminer $\theta_{max}$).

Ensuite, les moyens 21 d'addition des voies rephasées effectuent la somme du signal S1 avec le signal S2 rephasé. En ajoutant les signaux rephasés des deux voies, le signal de parole se somme de façon cohérente et on obtient donc un signal de parole d'amplitude importante. En revanche, le signal de bruit se trouve affaibli par rapport au signal de parole ainsi obtenu du fait de l'étalement spectral du bruit (le signal de bruit ne provient pas d'une source localisée comme le signal de parole). La sommation des signaux rephasés constitue ainsi une amplification du signal de parole par rapport au signal de bruit.

Cependant, la réjection du bruit n'est généralement pas suffisante puisqu'il existe un bruit résiduel dont les composantes spectrales ont le même angle d'arrivée que le signal de parole. Il est donc nécessaire d'effectuer une étape de traitement supplémentaire.

Il est à signaler que cette troisième étape de traitement de signal est facultative, l'un des deux signaux, par exemple le signal S2, pouvant être directement exploité pour la suite du déroulement du procédé. Dans ce cas, le signal issu des moyens de sommation 21 est remplacé par le signal S2.

Il est également possible d'utiliser un nombre de microphones fixes plus important. Cependant, l'utilisation de signaux numériques correspondant à des composantes fréquentielles de signaux prélevés par plusieurs microphones complique l'algorithme de calcul de l'angle d'arrivée $\theta$ pour chaque canal de fréquence et également la remise en phase de ces signaux afin de permettre par exemple leur sommation. Il n'est pas non plus intéressant d'utiliser les signaux correspondant au signal sonore prélevé par un troisième microphone pour qu'ils remplacent ceux issus du sommateur 21, car leurs angles d'arrivées seront forcément différents de celui des signaux S1 et S2 et l'angle d'arrivée dominant trouvé ne pourra pas tenir compte de ces signaux prélevés par ce troisième microphone.

L'étape de traitement supplémentaire constitue la quatrième étape précédemment indiquée et consiste à mettre à jour le spectre de bruit. Cette mise à jour du spectre de bruit s'effectue d'une part à partir de l'angle d'arrivée $\theta_{max}$ reconnu comme étant celui de la parole, et d'autre part à partir du spectre instantané constitué par les séries de données numériques fournies par les moyens d'addition 21.

Pour chaque canal de fréquence, un dispositif 22 de mise à jour du spectre de bruit compare l'angle d'arrivée $\theta$ calculé par le dispositif de calcul 18 à l'angle d'arrivée $\theta_{max}$ de la parole qui lui est fourni par le dispositif 19. Le dispositif 22 peut par exemple comparer la valeur absolue de la différence entre $\theta_{max}$ et $\theta$, pour chaque canal de fréquence, avec un seuil de tolérance $\theta_{s}$.

Si la valeur absolue de l'écart entre ces deux angles est supérieure au seuil de tolérance $\theta_{s}$, le canal de fréquence correspondant est considéré comme appartenant au spectre du bruit. L'énergie présente dans ce canal est alors utilisée pour mettre à jour le spectre de bruit, par exemple par moyenne glissante. Cette mise à jour peut bien entendu également consister à simplement remplacer une partie des données du spectre de bruit par les données correspondantes du spectre instantané. Ce spectre de bruit est mémorisé dans une mémoire numérique 23. L'introduction d'un seuil de tolérance $\theta_{s}$ permet de tenir compte de faibles variations de position du locuteur par rapport aux deux microphones et également des imprécisions de calcul.

Si la valeur absolue de l'écart entre les deux angles $\theta_{max}$ et $\theta$ est inférieure au seuil de tolérance $\theta_{s}$, le canal de fréquence observé est considéré comme appartenant au spectre de la parole et son énergie n'est donc pas utilisée pour mettre à jour le spectre de bruit dans la mémoire 23.

Le dispositif 22 permet donc de mettre à jour le spectre de bruit en comparant l'angle d'arrivée $\theta$ de chaque canal de fréquence avec l'angle d'arrivée dominant $\theta_{max}$. Cet angle $\theta_{max}$ calculé a donc pour fonction de permettre une sélection des fréquences du spectre obtenu par les FFT. Bien entendu, il n'est pas indispensable d'effectuer une valeur absolue de la différence entre l'angle d'arrivée dominant et l'angle d'arrivée de chaque canal de fréquence du spectre instantané. Il est par exemple possible de délimiter une plage d'angle d'arrivée, de largeur $2\theta_{s}$ et centrée sur $\theta_{max}$, et de vérifier si l'angle d'arrivée $\theta$ de chaque canal de fréquence se situe dans cette plage.

Il est à noter que la mise à jour du spectre de bruit est réalisée de manière continue, toutes les 32 ms, qu'il y ait ou non de signal de parole dans le signal reçu par les deux microphones 10,11. Le procédé de l'invention se distingue donc de l'état de la technique précité en ce qu'il n'est pas nécessaire de disposer de périodes de silence pour permettre la mise à jour du spectre de bruit, la détermination d'appartenance de chaque canal de fréquence au spectre de bruit ou au spectre du signal de parole étant effectuée à partir de l'angle d'arrivée dominant calculé et de l'angle d'arrivée pour le canal considéré.

La cinquième étape consiste à soustraire le spectre de bruit du spectre instantané mesuré.

Cette étape met en oeuvre un dispositif 24 de soustraction du spectre de bruit au spectre instantané. Le spectre de bruit est lu dans la mémoire numérique 23 et soustrait du spectre instantané provenant du dispositif 22. Si l'amplification constituant la deuxième étape du présent procédé n'est pas mise en oeuvre, le spectre instantané est constitué par les vecteurs d'un des deux signaux, par exemple de ceux du signal S2.

Cette soustraction permet d'obtenir un spectre de sortie constitué par un spectre du signal de parole presque entièrement dénué de composantes spectrales de bruit. Il est cependant possible d'effectuer un traitement supplémentaire du spectre obtenu, permettant notamment d'effectuer une correction du spectre de bruit mis à jour.

Après soustraction, les résultats négatifs sont forcés à zéro. Deux cas peuvent alors se présenter:

- le spectre instantané ne contenait pas de signal de parole et le spectre résiduel ne contient alors qu'un petit nombre de fréquences significatives;
- le spectre instantané contenait un signal de parole et le spectre résiduel comporte alors un nombre important de fréquences porteuses d'énergie correspondant essentiellement au spectre de la parole.

Afin de connaître le contenu du spectre instantané, il suffit donc de compter le nombre de canaux de fréquence pour lesquels la puissance spectrale est supérieure à une valeur de seuil Sp permettant de ne pas prendre en compte les canaux de fréquence porteurs d'une énergie faible, pouvant donc être éliminés. Ces canaux de fréquence correspondent soit à du bruit résiduel, soit à des canaux de fréquence de parole mais qui sont d'énergie tellement faible qu'il n'est pas nécessaire de les transmettre vers leur destinataire (application radiotéléphonique).

Préférentiellement, la valeur du seuil Sp n'est pas la même pour chaque canal de fréquence et dépend de l'énergie présente dans chacun de ces canaux de fréquence. On peut par exemple affecter une première valeur de seuil aux canaux de la bande de fréquence 0-2 kHz, et une deuxième valeur de seuil, par exemple égale à la moitié de la première valeur de seuil, aux canaux de la bande de fréquence 2-4 kHz. Ceci permet de tenir compte du fait que les énergies du spectre de bruit sont plus importantes dans les basses fréquences que dans les hautes fréquences dans un véhicule.

Si le nombre de canaux de fréquence ayant une énergie supérieure à Sp est faible (inférieur à une valeur de seuil numérique), les canaux de fréquence comptés sont considérés comme comportant des fréquences résiduelles de bruit. La totalité du spectre instantané (c'est à dire les données présentées à l'entrée du dispositif 22) est alors utilisée pour mettre à jour le spectre de bruit. Cette opération a lieu dans la mémoire numérique 23 et constitue la sixième étape de traitement du signal. Elle consiste plus précisément à remplacer les énergies des canaux de fréquence du spectre de bruit mis à jour par les énergies des canaux de fréquence correspondants du spectre instantané. De plus, les canaux de fréquence dont l'énergie dépasse le seuil Sp sont forcés à zéro avant de remplacer les canaux de fréquence du spectre de bruit. On élimine ainsi les fréquences porteuses de bruit de forte amplitude.

Dans une variante de réalisation, seuls les canaux de fréquence du spectre instantané présentant des énergies supérieures à celles des canaux de fréquence correspondants du spectre de bruit sont utilisés pour le remplacement. On tient ainsi uniquement compte des canaux de fréquence du spectre instantané présentant une énergie importante.

Si le spectre obtenu après soustraction correspond à un signal de parole (c'est à dire que le nombre de canaux de fréquence présentant après soustraction une énergie supérieure à Sp est supérieur à la valeur de seuil numérique), seules les énergies des canaux de fréquence du spectre instantané correspondant aux canaux de fréquence du spectre résiduel après soustraction présentant un résultat négatif sont utilisées pour corriger le spectre de bruit. En effet, un résultat négatif après soustraction signifie que le canal de fréquence correspondant du spectre de bruit mis à jour possède une énergie trop importante. Cette correction permet d'éviter que le spectre de bruit résiduel (c'est à dire le spectre mis à jour) ne soit plus constitué que de quelques canaux de fréquence de forte amplitude, ce qui le rendrait particulièrement désagréable et gênant à la restitution sonore.

Bien entendu, la correction du spectre de bruit constituant cette sixième étape de traitement est optionnelle et peut être menée de différentes manières à partir du moment où l'on décide si le spectre obtenu par soustraction doit ou non être considéré comme un spectre contenant des canaux de fréquence de parole à exploiter, par exemple à transmettre vers un destinataire.

La dernière et septième étape de traitement consiste à construire un signal de sortie analogique pour permettre par exemple son émission. Cette étape met en oeuvre un dispositif 25 de génération du signal de sortie comprenant un dispositif 26 de transformée inverse de Fourier rapide (FFT$^{-1}$) fournissant 512 échantillons du signal de parole. Le dispositif FFT$^{-1}$ est précédé d'un dispositif non représenté permettant de régénérer les 256 vecteurs reçus pour obtenir 512 vecteurs à l'entrée du dispositif FFT$^{-1}$. Le dispositif 26 est suivi d'un dispositif 27 de recouvrement permettant une reconstruction aisée du signal de sortie. Le dispositif 27 assure un recouvrement des premiers 256 échantillons reçus avec les 256 derniers échantillons qu'il aura précédemment reçus (faisant partie du traitement précédent). Ce recouvrement permet de compenser en sortie l'application d'une fenêtre de Hamming en entrée. Un convertisseur numérique-analogique 28 permet d'obtenir un signal sonore peu bruité prêt à être émis vers son destinataire. Il est également possible d'enregistrer ce signal, par exemple sur une bande magnétique, ou de lui faire subir un autre traitement.

Cette septième étape peut ne pas être mise en oeuvre dans certaines applications. Par exemple, le procédé de l'invention pourrait s'appliquer à la reconnaissance vocale, et, dans ce cas, la septième étape de traitement peut être omise, puisque les dispositifs de reconnaissance vocale exploitent la représentation spectrale d'un signal de parole.

Le procédé de l'invention permet donc de diminuer sensiblement le spectre de bruit d'un signal sonore pour fournir un signal de parole, et ce, sans nécessiter de périodes de silence du locuteur pour mettre à jour le spectre de bruit, puisque la connaissance de l'angle d'arrivée du signal est utilisée pour séparer le bruit de la parole.

## Revendications

1. Procédé de réduction de bruit acoustique compris dans un signal sonore reçu comprenant un signal de parole, du type consistant à soustraire les composantes spectrales de bruit dudit signal sonore reçu pour reconstituer le spectre dudit signal de parole, caractérisé en ce qu'il consiste à:

   - convertir (16,17) cycliquement par transformée de Fourier des signaux numériques, résultant de conversions analogiques-numériques (12,13) de signaux fournis par deux microphones (10,11) éloignés d'une distance fixe et recevant ledit signal sonore, en deux séries (S1,S2) de données discrètes, chaque donnée discrète desdites séries étant représentative de l'énergie et de la phase d'un canal de fréquence du spectre dudit signal sonore, lesdits canaux de fréquence étant adjacents de façon à être représentatifs dudit spectre dudit signal sonore reçu;

- déterminer (18,19) l'angle d'arrivée dominant ($\theta_{max}$) dudit signal sonore reçu parmi les angles d'arrivée $\theta$ calculés à partir des différences de phase entre les données discrètes correspondant aux mêmes canaux de fréquence desdites séries (S1,S2), ledit angle d'arrivée dominant ($\theta_{max}$) correspondant à l'angle d'arrivée dudit signal de parole par rapport aux deux microphones;

- obtenir un spectre instantané dudit signal sonore reçu correspondant à une desdites séries (S1,S2) de données discrètes ou obtenu par une combinaison (20,21) desdites séries (S1,S2) discrètes permettant d'obtenir une amplification dudit signal de parole par rapport audit bruit;

- mettre à jour (22) un spectre de bruit (23) en comparant, pour chaque canal de fréquence dudit spectre instantané, la valeur absolue de la différence entre ledit angle d'arrivée dominant ($\theta_{max}$) et l'angle d'arrivée ($\theta$) du canal de fréquence considéré avec une valeur de seuil de tolérance ($\theta_s$), ledit spectre de bruit (23) étant constitué des mêmes canaux de fréquence que ledit spectre instantané, les énergies desdits canaux de fréquence dudit spectre de bruit (23) étant mises à jour à l'aide des énergies des canaux de fréquence dudit spectre instantané dont la valeur absolue de la différence entre ledit angle d'arrivée dominant ($\theta_{max}$) et l'angle d'arrivée ($\theta$) de ces canaux de fréquence est supérieure à ladite valeur de seuil de tolérance ($\theta_s$);

- soustraire (24) ledit spectre de bruit (23) mis à jour dudit spectre instantané pour obtenir un spectre de sortie constitué par ledit spectre dudit signal de parole.

2. Procédé selon la revendication 1, caractérisé en ce qu'il consiste à corriger ledit spectre de bruit (23) mis à jour en fonction du résultat de ladite soustraction (24).

3. Procédé selon la revendication 2, caractérisé en ce que ladite correction (24) dudit spectre de bruit (23) mis à jour consiste à compter, après ladite soustraction, le nombre de canaux de fréquence dont l'énergie est supérieure à une valeur (Sp) de seuil d'énergie, et à remplacer ledit spectre de bruit (23) mis à jour par la totalité dudit spectre instantané si le nombre desdits canaux de fréquence dont l'énergie est supérieure à ladite valeur (Sp) de seuil d'énergie est inférieur à une valeur numérique prédéterminée.

4. Procédé selon la revendication 3, caractérisé en ce que les énergies des données discrètes du résultat de ladite soustraction supérieures à ladite valeur (Sp) de seuil d'énergie sont forcées à zéro avant que ledit résultat ne remplace ledit spectre de sortie.

5. Procédé selon l'une des revendications 2 à 4, caractérisé en ce que ladite correction dudit spectre de bruit (23) mis à jour consiste à compter, après ladite soustraction, le nombre de canaux de fréquence dont l'énergie est supérieure à ladite valeur (Sp) de seuil d'énergie, et à remplacer les canaux dudit spectre de bruit (23) mis à jour par les canaux dudit spectre instantané ayant produit un résultat négatif après ladite soustraction (24) si le nombre desdits canaux de fréquence dont l'énergie est supérieure à ladite valeur (Sp) de seuil d'énergie est supérieur à ladite valeur numérique prédéterminée.

6. Procédé selon l'une des revendications 1 à 5, caractérisé en ce que ladite détermination (18,19) dudit angle d'arrivée dominant ($\theta_{max}$) est réalisée en sommant dans des cases mémoire, pour chacun desdits canaux de fréquence, des poids proportionnels à l'énergie desdits canaux de fréquence, chaque case mémoire correspondant à un intervalle d'angle d'arrivée, lesdits poids étant sommés dans les cases mémoire correspondant aux angles d'arrivée ($\theta$), desdits canaux de fréquence, ledit angle d'arrivée dominant ($\theta_{max}$) correspondant à l'angle d'arrivée ($\theta$) affecté à la case mémoire dont le poids est le plus important.

7. Procédé selon la revendication 6, caractérisé en ce que lesdits poids sont également proportionnels aux fréquences desdits canaux de fréquence.

8. Procédé selon l'une des revendications 6 et 7, caractérisé en ce que lesdites sommations consistent à effectuer des moyennes glissantes.

9. Procédé selon l'une des revendications 1 à 8, caractérisé en ce que ladite combinaison (20,21) desdites séries (S1,S2) discrètes permettant d'obtenir une amplification dudit signal de parole par rapport audit bruit consiste à:

- mettre en phase (20) lesdites données discrètes d'une (S2) desdites séries avec celles de l'autre (S1) desdites séries à partir dudit angle d'arrivée dominant ($\theta_{max}$) de façon à mettre en phase les données discrètes desdites séries (S1,S2) dont l'angle d'arrivée correspond audit angle d'arrivée dominant ($\theta_{max}$);

- sommer (21) lesdites données discrètes desdites séries (S1,S2) en phase afin d'amplifier les données discrètes correspondant audit signal de parole par rapport aux données discrètes correspondant audit bruit acoustique.

10. Procédé selon l'une des revendications 1 à 9, caractérisé en ce qu'il est appliqué pour le traitement d'un signal de parole dans un radiotéléphone.

**Patentansprüche**

1. Verfahren zur Verringerung des akustischen Rauschens in einem empfangenen akustischen Signal, das ein Sprachsignal enthält, wobei die spektralen Rauschkomponenten von dem empfangenen akustischen Signal abgezogen werden, um das Spektrum des Sprachsignals zu bilden, dadurch gekennzeichnet, daß es darin besteht,

- zyklisch durch die Fouriertransformierte (16, 17) digitale Signale, die aus der Analog-Digital-Umwandlung (12, 13) von durch zwei Mikrophone (10, 11), die einen festen Abstand voneinander haben und das akustische Signal empfangen, gelieferten Signalen in zwei Serien (S1, S2) von diskreten Angaben zu verwandeln, wobei jede diskrete Angabe der Serien für die Energie und die Phase eines Frequenzbands des Spektrums des akustischen Signals repräsentativ ist und die Frequenzbänder aneinander anschließen sowie für das Spektrum des empfangenen akustischen Signals repräsentativ sind;
- den dominanten Ankunftswinkel ($\Theta_{max}$) des empfangenen akustischen Signals unter den berechneten Ankunftswinkeln $\Theta$ ausgehend von den Phasenunterschieden zwischen den diskreten Angaben entsprechend den gleichen Frequenzbändern dieser Serien (S1, S2) zu bestimmen (18, 19), wobei der dominante Ankunftswinkel ($\Theta_{max}$) dem Ankunftswinkel des Sprachsignals bezüglich der beiden Mikrophone entspricht,
- ein augenblickliches Spektrum des empfangenen akustischen Signals entsprechend einer der Serien (S1, S2) von diskreten Angaben oder entsprechend einer Kombination (20, 21) der diskreten Serien (S1, S2) zu bilden, woraus sich eine Verstärkung des Sprachsignals bezüglich des Rauschens ergibt,
- ein Rauschspektrum (23) zu aktualisieren (22), indem für jedes Frequenzband des augenblicklichen Spektrums der Absolutwert der Differenz zwischen dem dominanten Ankunftswinkel ($\Theta_{max}$) und dem Ankunftswinkel ($\Theta$) des betreffenden Frequenzbands mit einem Toleranzschwellwert ($\Theta_s$) verglichen wird, wobei das Rauschspektrum (23) von den gleichen Frequenzbändern wie das augenblickliche Spektrum gebildet wird und die Energien der Frequenzbänder des Rauschspektrums (32) mit Hilfe der Energien der Frequenzbänder des augenblicklichen Spektrums aktualisiert werden, deren Absolutwert der Differenz zwischen dem dominanten Ankunftswinkel ($\Theta_{max}$) und dem Ankunftswinkel ($\Theta$) dieser Frequenzbänder größer als der Toleranzschwellwert ($\Theta_s$) ist;

- das aktualisierte Rauschspektrum (23) von dem augenblicklichen Spektrum abzuziehen (24), um ein Ausgangsspektrum zu erhalten, das von dem Spektrum des Sprachsignals gebildet wird.

2. Verfahren nach Anspruch 1, dadurch gekennzeichnet, daß es darin besteht, das aktualisierte Rauschspektrum (23) abhängig vom Ergebnis der Subtraktion (24) zu korrigieren.

3. Verfahren nach Anspruch 2, dadurch gekennzeichnet, daß die Korrektur des aktualisierten Rauschspektrums (23) darin besteht, nach der Subtraktion die Anzahl von Frequenzbändern zu zählen, deren Energie einen Energieschwellwert (Sp) übersteigt, und das aktualisierte Rauschspektrum (23) durch die Gesamtheit des augenblicklichen Spektrums zu ersetzen, wenn die Anzahl der Frequenzbänder, deren Energie den Energieschwellwert (Sp) übersteigt, geringer als ein vorgegebener Zahlenwert ist.

4. Verfahren nach Anspruch 3, dadurch gekennzeichnet, daß die den Energieschwellwert (Sp) übersteigende Energie der diskreten Angaben des Ergebnisses der Subtraktion auf Null gesetzt wird, ehe das Ergebnis das Ausgangsspektrum ersetzt.

5. Verfahren nach einem der Ansprüche 2 bis 4, dadurch gekennzeichnet, daß die Korrektur des aktualisierten Rauschspektrums (23) darin besteht, nach der Subtraktion die Anzahl von Frequenzbändern zu zählen, deren Energie den Energieschwellwert (Sp) übersteigt, und die Bänder des aktualisierten Rauschspektrums (23) durch die Bänder des augenblicklichen Spektrums zu ersetzen, die ein negatives Ergebnis nach der Subtraktion (242) erbracht haben, wenn die Anzahl der Frequenzbänder, in denen die Energie den Energieschwellwert (Sp) übersteigt, größer als der vorgegebene Zahlenwert ist.

6. Verfahren nach einem der Ansprüche 1 bis 5, dadurch gekennzeichnet, daß die Bestimmung (18, 19) des dominanten Ankunftswinkels ($\Theta_{max}$) dadurch erreicht wird, daß in Speicherfächern für jedes der Frequenzbänder die Gewichte proportional zur Energie der Frequenzbänder summiert werden, wobei jedes Speicherfach einem Intervall des Ankunftswinkels entspricht und die Gewichte in den Speicherfächern entsprechend den Ankunftswinkel ($\Theta$) der Frequenzbänder summiert werden, und daß der dominante Ankunftswinkel ($\Theta_{max}$) dem Ankunftswinkel ($\Theta$) entspricht, der dem Speicherfach mit dem größten Gewicht zugewiesen ist.

7. Verfahren nach Anspruch 6, dadurch gekennzeichnet, daß die Gewichte auch proportional zu den Frequenzen der Frequenzbänder sind.

8. Verfahren nach einem der Ansprüche 6 und 7, dadurch gekennzeichnet, daß die Summierungen darin bestehen, gleitende Mittelwerte zu bilden.

9. Verfahren nach einem der Ansprüche 1 bis 8, dadurch gekennzeichnet, daß die Kombination (20, 21) der diskreten Serien (S1, S2), mit der eine Verstärkung des sprachsignals bezüglich des Rauschsignals erhalten wird, darin besteht,

- die diskreten Angaben einer der Serien (S2) mit denen der anderen Serie (S1) ausgehend vom dominanten Ankunftswinkel ($\Theta_{max}$) in Phase zu bringen (20), so daß die diskreten Angaben der Serien (S1, S2) in Phase kommen, deren Ankunftswinkel dem dominanten Ankunftswinkel ($\Theta_{max}$) entspricht;
- die diskreten Angaben der in Phase gebrachten Serien (S1, S2) zu summieren (21), um die diskreten Angaben entsprechend dem Sprachsignal gegenüber den diskreten Angaben entsprechend dem akustischen Rauschen zu verstärken.

10. Verfahren nach einem der Ansprüche 1 bis 9, dadurch gekennzeichnet, daß es auf die Verarbeitung eines Sprachsignals in einem Mobiltelefon angewendet wird.

**Claims**

1. Method of reducing acoustic noise in a received sound signal incorporating a speech signal by subtracting spectral components of noise from said received sound signal to reconstitute the spectrum of said speech signal, characterised in that it consists in:

- applying Fourier transform processing (16, 17) to digital signals obtained by analogue-to-digital conversion (12, 13) of signals supplied by two microphones (10, 11) spaced by a fixed distance and receiving said sound signal to produce two series (S1, S2) of discrete data, each discrete datum of said series representing the energy and phase of a frequency band of the spectrum of said sound signal, said frequency bands being adjacent and therefore representative of said spectrum of said received sound signal;
- determining (18, 19) the dominant angle of incidence ($\theta$max) of said received sound signal from the angles of incidence $\theta$ calculated from phase differences between the discrete data representing the same frequency bands of said series (S1, S2), said dominant angle of incidence ($\theta$max) representing the angle of incidence of said speech signal relative to the two microphones;
- obtaining an instantaneous spectrum of said received sound signal corresponding to one of said series (S1, S2) of discrete data or obtained by combining (20, 21) said discrete series (S1, S2) in order to amplify said speech signal relative to said noise;
- updating (22) a noise spectrum (23) by comparing for each frequency band of said instantaneous spectrum the absolute value of the difference between said dominant angle of incidence ($\theta$max) and the angle of incidence ($\theta$) of the frequency band in question with a tolerance threshold value ($\theta$s), said noise spectrum (23) comprising the same frequency bands as said instantaneous spectrum, the energies of said frequency bands of said noise spectrum (23) being updated using the energies of the frequency bands of said instantaneous spectrum for which the absolute value of the difference between said dominant angle of incidence ($\theta$max) and the angle of incidence ($\theta$) of said frequency bands is greater than said tolerance threshold value ($\theta$s); and
- subtracting (24) said updated noise spectrum (23) from said instantaneous spectrum to obtain an output spectrum consisting of said spectrum of said speech signal.

2. Method according to claim 1 characterised in that it consists in correcting said updated noise spectrum (23) on the basis of the result of said subtraction (24).

3. Method according to claim 2 characterised in that said updated noise spectrum (23) is corrected (24) by counting, following said subtraction, the number of frequency bands in which the energy is above an energy threshold value (Sp) and replacing said updated noise spectrum (23) by the totality of said instantaneous spectrum if the number of said frequency bands in which the energy is above said energy threshold value (Sp) is less than a predetermined numerical value.

4. Method according to claim 3 characterised in that the energies of the discrete data of the result of said subtraction greater than said energy threshold value (Sp) are forced to zero before said result replaces said output spectrum.

5. Method according to any one of claims 2 to 4 characterised in that said updated noise spectrum (23) is corrected by counting, following said subtraction, the number of frequency bands in which the energy is greater than said energy threshold value (Sp) and replacing the bands of said updated noise spectrum (23) by the bands of said instantaneous spectrum producing a negative result after said subtraction (24) if the number of said frequency bands whose energy is greater than said energy threshold value (Sp) is greater than said predetermined numerical value.

6. Method according to any one of claims 1 to 5 characterised in that said dominant angle of incidence ($\theta$max) is determined (18, 19) by adding in memory locations for each of said frequency bands weightings proportional to the energy of said frequency bands, each memory location representing a range of angles of incidence, said weights being added in the memory locations corresponding to the angles of incidence ($\theta$) of said frequency bands, said dominant angle of incidence ($\theta$max) corresponding to the angle of incidence ($\theta$) assigned to the memory location of greatest weight.

7. Method according to claim 6 characterised in that said weights are also proportional to the frequencies of said frequency bands.

8. Method according to claim 6 or claim 7 characterised in that said adding consists in calculating sliding averages.

9. Method according to any one of claims 1 to 8 characterised in that said discrete series (S1, S2) are combined (20, 21) to amplify said speech signal relative to said noise by:

   - eliminating (20) phase differences between said discrete data of one (S2) of said series and those of the other (S1) of said series on the basis of said dominant angle of incidence ($\theta$max) so as to eliminate phase differences between the discrete data of said series (S1, S2) whose angle of incidence corresponds to said dominant angle of incidence ($\theta$max); and
   - adding (21) said discrete data of said series (S1, S2) when in phase in order to amplify the discrete data representing said speech signal relative to the discrete data representing said acoustic noise.

10. Method according to any one of claims 1 to 9 characterised in that it is applied to processing a speech signal in a radiotelephone.